# EUROPEAN PATENT APPLICATION

(11) **EP 2 386 348 A1**
(43) Date of publication of application: **16.11.2011**
(21) Application number: 11401518.3
(22) Date of filing: 11.05.2011
(51) Int. Cl.: B01D 53/62, B01D 53/84

(54) **Method and system for removing pollutants from the environment**

(30) Priority: 11.05.2010 US 777966; 20.09.2010 US 886409
(71) Applicant: Rosenbaum, Walter, 75116 Paris (FR); Bach, Jörn, 78462 Konstanz (DE)
(72) Inventor: Rosenbaum, Walter, 75116 Paris (FR); Bach, Jörn, 78462 Konstanz (DE)
(74) Representative: Heyerhoff & Geiger

(57) **Abstract**

A system permanently removes pollutants, especially CO₂, from pollutant enriched environment, such as power plant or other industrial exhaust fumes, but also from the general atmosphere or other polluted environments, in a way that the pollutants are permanently prevented from re-entering the atmosphere. The system processes biomass and includes a pressing unit configured to press biomass into predetermined shapes, a sterilizing unit configured to sterilize the biomass, and a unit to combine the biomass with an encapsulating material.

## Description

### BACKGROUND OF THE INVENTION

The various embodiments described herein generally relate to removing pollutants from the environment gaseous pollutants from the atmosphere. More particularly, these embodiments relate to a method and system for removing gaseous pollutants from the atmosphere, as CO₂ or nitric oxide, e.g., related to industrial production procedures such as the production of electricity, heat, bio fuels, ethanol, as well as preventing release of such pollutants into the atmosphere as the result of such procedures or related procedures. Further the embodiments relate to removing agricultural waste products, as animal waste or fertilizer compounds from the environment.

Our current society, environment and economy are integrally tied to a carbon based energy cycle. Although nuclear and renewable energy are expected to make increasing contributions to world-wide energy needs, at present nearly 60% of the electrical power generation is affected via coal and almost 90% of electricity comes from some fossil fuel base. Although it is known to filter out some of the particulate matter that contributes to, for example, acid rain, the main byproduct of combustion, CO₂, is not presently containable in a way that the pollutants are permanently prevented from re-entering or being released back to the atmosphere.

Nature attempts to handle the deluge of CO₂ by photosynthesis and oceanographic geological formations of CO₂ based sedimentations such as limestone. In essence, nature attempts to keep a CO₂ balance by means of long term sequestering or re-capture in non-gaseous states. The permanence of photosynthesis sequestering such as via woodlands is relatively short compared to CO₂ sequestered in limestone.

Most currently artificial means of sequestering have been under investigation such as pumping CO₂ in gaseous form into underground natural geological formations. The shortcomings of such an approach is that the ability to contain almost indefinitely massive amounts of CO₂, under tremendous pressure, that will not leak to the surface or rupture due to shifts in the earths crust is problematic at best.

N₂O and other nitrogen compounds have a green house equivalent per several hundred times that of CO₂. N_{2O} has a green house impact of 298 x CO₂. But not only is the atmosphere unfavorably influenced by nitrogen compounds. An example is the Baltic Sea, where nitrogen compounds of masses of animal waste from animal farms and other agricultural activities induced a collapse of the marine ecological balance.

### SUMMARY OF THE INVENTION

Hence a need exists for removing pollutants from the environment, like sequestering CO₂ that is for all practical purposes permanent and by its nature independent of geology. A further need exists that any conceivable leakage be both environmentally and human health-wise inconsequential. It is further desirable that the removing be able to encapsulate other pollutants such as N₂0 and other combustion nitrogen wastes, methane, nitrates, nitrites or heavy metals. Additionally, it is further desirable that the removing can be done at any location independent of geology and be the concatenation of low-technology processing steps.

The invention according to a first idea is directed to a method of processing bio mass, comprising: pressing bio mass into predetermined shapes, sterilizing the bio mass, and combining the bio mass with an encapsulating material to create blocks of processed bio mass.

Further the invention according to a second idea is directed to a method for removing pollutants from the environment comprising: bringing the pollutants with water and a binding agent into a liquid or viscous solution, changing the state of the pollutants from a solved state into a bound state, dehydrating the solution, bringing the dehydrate product into a predetermined shape, sterilizing the dehydrate product, and combining the dehydrate product with an encapsulating material to create blocks of encapsulated processed product.

The inventions according to both ideas may be combined with one or more of the following steps:
- Storing the blocks of processed bio mass in a secure location.
- Monitoring the stored blocks of processed bio mass for influences detrimental to storage security.
- Storing at least one monitored sample of stored blocks separate from a storage environment under conditions corresponding to conditions in a storage environment.
- The bio mass being algae or corn stover.
- The encapsulating material being selected from the group consisting of polymer, glass, metal, and cement.
- Adding pollutant absorbing substances to the encapsulation material.
- Adding stabilizing structures to the encapsulation material.
- Combining the bio mass with the encapsulating material forms a primary encapsulation.
- The primary encapsulation being surrounded by one or more additional layers of encapsulation to form a secondary encapsulation.
- A material for the secondary encapsulation being different from the material for the primary encapsulation.
- The secondary encapsulation being a ready made container.
- Sterilizing of the bio mass is accomplished during pressing.
- The dehydrating comprising a pressing of the dehydrate product into said predetermined shape.
- Bringing pollutant absorbing substance into the solution, wherein changing the state of the pollutants comprises absorption of the solved pollutant by the absorber thus binding the pollutant to the absorber.
- The pollutant absorber being a used up cellulose product being shredded before brought into the solution.
- Bringing living plant material into the solution, the plants decomposing the pollutant and binding at least a part of the decomposition products into biomass.
- Decomposing comprises metabolization of the pollutant.
- Decomposing comprises photosynthesis by consumption of the pollutant.
- The pollutant is an exhaust gas from an industrial process, in particular CO₂ and/or animal excreta.
- Bringing living plant material into the solution, wherein the pollutant and the water produce a nutrient solution for the plants.
Permanent and secure storage of CO₂ and other pollutants is not guaranteed when it is used in its original form. Therefore such storage would be greatly facilitated if, prior to storage, the pollutants would be "channeled" through procedures that effectively destroy them by affecting the molecular structure. A common naturally occurring example for such procedures is photosynthesis, where CO₂ is used together with H₂O using sunlight as an energy source to synthesize CH₂O. Similarly, algae in particular and bio-mass in general absorbs nitrogen pollutants such as N₂O and genetically modified strains have been reported to absorb methane
- nother very potent green house gas.

It is advantageous, therefore, to change the state of the pollutant to a form bound with the aid of a binding agent. This form may be securely stored more easily. The binding agent can be a mechanical binding agent for mechanically binding the pollutant, like an absorbing substance, as a cellulose product, as cordboard, paper, or the like. On the other hand, the binding agent could be a chemical or biological binding agent, which chemically respectively biologically binds the pollutant with or without chemically changing its components or molecules. An example for a biologically binding agent is algae using photosynthesis to decompose or metabolize the pollutant CO₂ generating CH_{2O} and other substances, and releasing O₂. Other living plant material or biomass is suitable as well.

The binding of the pollutant to the binding agent is easily achieved by bringing the pollutants with water and a binding agent into a liquid or viscous solution. The solution may be any composition, wherein the pollutant is solved or unsolved in the water. The pollutant may be mixed with the binding agent for better contact of both. Lastly, it would complete an ecologically positive sequestering process if the sequestering medium, as the binding agent, was another industrial and/or societal waste product.

However, with respect to the permanent removal of CO₂ and other pollutants from the environment, the atmosphere or from exhaust fumes or effluent of industrial plants the binding of the pollutant might be insufficient since the pollutant, as CO₂ is, under normal circumstances, only "parked" within the binding agent, as biomass, which is usually intended for the production of animal food or for the generation of so called bio diesel, or other processes releasing the pollutant in one or the other form. In such cases the pollutant bound within the binder is sooner or later returned to the environment either by natural oxidation, burning as fuel or otherwise or by the digestion processes of animals. The same happens in naturally occurring deterioration commonly referred to as "rotting", through the activity of bacteria.

To fully exploit the pollutant consuming potential of such procedures, of which plant or algae growth is only an example, it is therefore advantageous that the product of the binding procedures is neither burned nor used as food material or stored in its original form, but isolated from deteriorating environmental influences such as bacteria. The same release also occurs for the other greenhouse gas or chemical or biological pollutants mentioned above.

To isolate the binding product from deteriorating environmental influences it is advantageous to dehydrating the solution in which the binding product is part of. Another step is bringing the dehydrate product into a predetermined shape. This storage form might be impermanent and prone to decomposition. This may be prevented by a sterilization to remove decomposing agents such as bacteria and microorganisms. Further, an encapsulation of the product in a way that prevents it from contact with air and microorganisms and thus decomposition could be done. This can be achieved by mixing or combining it with a non-biodegradable material such as a polymer to isolate it from further contact with the air or decomposing agents. The sequence of the steps of dehydrating, shaping, sterilizing and combining is arbitrary. Further, any combination of two, three or all of these steps in a single step is possible and might increase process efficiency.

The various embodiments described herein address agricultural and industrial production procedures that involve the production and release of CO₂, nitric substances, and/or other pollutants. This invention can reduce the overall amount of pollutant production in such procedures by either processing the pollutants, as industrial exhaust fumes or agricultural waste, in the manner described below or by preventing biomass, which is produced by these processes as waste or remnants of raw materials, from degenerating and releasing pollutants into the environment.

In a first embodiment of the invention, the pollutant is an exhaust gas, as CO₂, a nitric gas, and/or a gas containing metal, and the binding agent is a biological agent, as biomass, e.g. algae, binding the pollutant gas by biological process.

In this embodiment, the exhaust gas, called CO₂ for convenience in the following, is first brought into a form, in which it is neutral and no longer immediately harmful to the environment and also has a much more economic storage volume. This is achieved by employing the photosynthetic capabilities of certain plants, preferably water based algae, or land based plants. These plants consume CO₂, and, using light, preferably sunlight and water (H₂O), synthesize CH₂O releasing O₂ as a waste product. In case the industrial fumes have to be processed for CO₂ removal the CO₂ enriched air is directed into a biomass cultivation environment where the CO₂ is consumed and converted to CH₂O to aid in building biomass. The cultivation environment can be aquatic, as in the case of algae biomass or land based, depending on the specific type of biomass used.

This processional step is used in the production of bio diesel from algae using power plant exhausts. However, since these installations are concerned with the production of certain goods the cultivation of algae has to take place in extremely well controlled environments and under carefully monitored light and temperature conditions to ensure that a high purity of a certain strain of algae is achieved. For removing pollutants from the industrial exhaust fumes the technology disclosed herein is concerned with achieving maximum CO₂ absorption by the algae.

As a further protection against damage or decomposition by environmental influences this primary encapsulation is supplemented by a secondary encapsulation that surrounds the mixture with an additional layer of protection. The units that are the final result of this procedure can be molded in a way that facilitates transport and storage.

The system and method described herein have the advantage to transform the gaseous CO₂, which is toxic in high concentrations and is considered to be responsible for the greenhouse effect into easily manageable storage units. These units can be very compact, have a highly economic storage volume of up to 2t of CO₂ per ton of algae, and do not pose the same danger of leaking the CO₂ back into the environment, or noxious byproducts, as in other forms of CO₂ storage, such of sequestering in rock fissures or deep sea sequestering or retention by chemical interaction.

In another embodiment of the invention, the pollutant is a nitric substance, especially a nitric gas, an animal excreta, as liquid manure, slurry, droppings of chicken or turkey, dung, or the like. In this embodiment the binding agent may be any chemical or biological agent being able to bind the pollutant by a biological or chemical process, especially decompose the nitric substance or a polluting part of it. The agent could be algae or other living plants. Advantageously the selection of the binding agent takes place dependent of the pollutant, so that the pollutant and the water produce a nutrient solution for the binding agent, e.g. the plants.

For permanently removing pollutants from the environment, the invention is further directed in a first idea to a system for processing bio mass, comprising a pressing unit configured to press bio mass into predetermined shapes, a sterilizing unit configured to sterilize the bio mass, and a unit to combine the bio mass with an encapsulating material. Further the invention according to a second idea is directed to a system for removing pollutants from the environment, especially for processing bio mass, the system comprising a dehydrating unit for dehydrating a solution into a dehydrate product, the solution containing the pollutants, water, and a binding agent, a shaping unit for bringing the dehydrate product into a predetermined shape, a sterilizing unit configured to sterilize the dehydrate product, especially biomass, as corn stover, and a unit to combine the processed product with an encapsulating material, especially to create blocks of processed product.

The inventions according to both ideas may be combined with one or more of the following features:
- A storage unit configured to store the blocks of processed bio mass.
- At least one detector configured to detect influences compromising storage security, wherein the at least one detector is coupled to a block of processed bio mass.
- The pressing unit and the sterilizing unit are integrated.
- The bio mass being algae and/or corn stover.

The shaping unit may be a pressing unit configured to press biomass into predetermined shapes. At least two of the dehydrating unit, shaping unit and sterilizing unit, may form one unit for performing at least two steps of dehydrating, shaping, respectively sterilizing simultaneously in one step.

The system may further comprise a storage unit configured to store the blocks of processed bio mass. Further at least one detector configured to detect influences compromising storage security is advantageous, wherein the detector is coupled to a block of processed bio mass.

### BRIEF DESCRIPTION OF THE SEVERAL VIEWS OF THE DRAWINGS

The novel features and method steps characteristic of the invention are set out in the claims below. The invention itself, however, as well as other features and advantages thereof, are best understood by reference to the detailed description, which follows, when read in conjunction with the accompanying drawings, wherein:
- Fig. 1: shows an illustration of one embodiment of a system for removing gaseous pollutants from the environment; and
- Fig. 2: is a flow chart of one embodiment of a method of removing gaseous pollutants from the environment.

### DETAILED DESCRIPTION OF PRESENTLY PREFERRED EMBODIMENTS

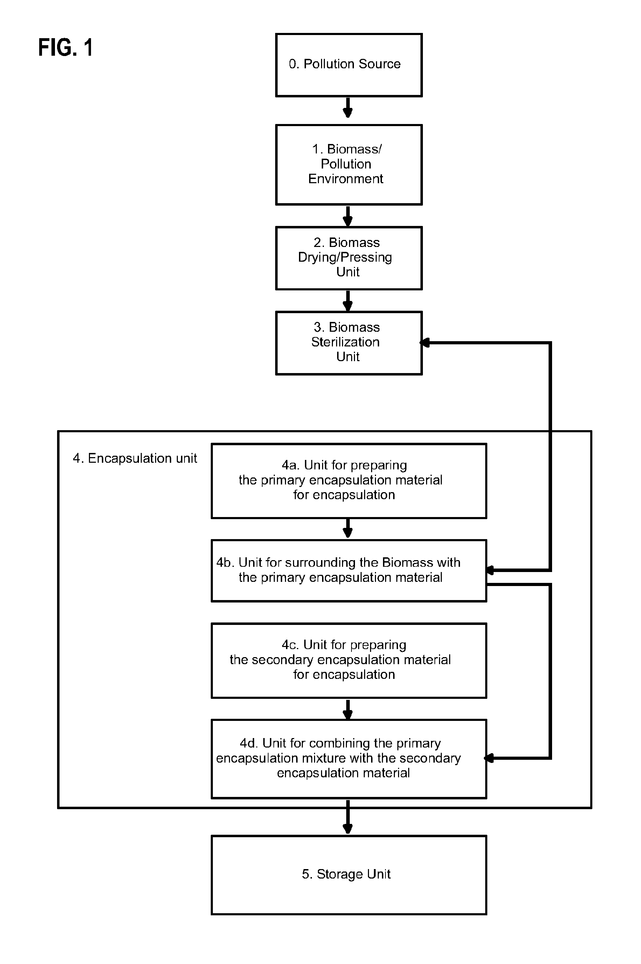

Fig. 1 shows an illustration of one embodiment of a system for removing pollutants from the environment. One example of a gaseous pollutant is CO₂. It is contemplated that other pollutants, gaseous, solid, liquid or metal, which may be consumed by plants that perform oxygenic photosynthesis, may be removed as well. In one embodiment the function of the system is to neutralize a pollutant via consumption by algae or other plants, also referred to as biomass, that perform oxygenic photosynthesis and are able to consume pollutants. Further, the resulting biomass product may then be prevented from CO₂-generating decomposition by combining it with a multi layer encapsulation. In another embodiment gaseous or liquid pollutants or liquid suspensions of pollutants can be mechanically absorbed by biomass or by any other suitable products, as cellulose products, such as paper or cardboard, preferably used products. The term biomass as used in this disclosure also encompasses such secondary biomass products. Such pollutants could be, for example waste products of agricultural processes such as animal manure.

The illustrated system includes a biomass pollution environment 1, which receives pollutants from a pollution source 0, a biomass drying/ pressing unit 2, a biomass sterilization unit 3 and an encapsulation unit 4. The encapsulation unit 4 has several (sub)units: A unit 4a transforms a primary encapsulation material into a temporary viscous or liquid state, a unit 4b combines the biomass with the primary encapsulation material to create a primary encapsulation, a unit 4c transforms the secondary encapsulation material into a temporary viscous or liquid state, and a unit 4d combines a secondary encapsulation material with the primary encapsulation to create a secondary encapsulation. Obviously, many modifications and variations of the present invention are possible in light of the above teachings. It is, therefore, to be understood that within the scope of the appended claims, the invention may be practiced otherwise than as specifically described.

In the preferred embodiment the pollution source 0 is an electrical power plant, any other industrial facility or a CO₂ storage unit. In one embodiment, the CO₂ source 0 is the atmosphere. In another embodiment the pollution source 0 could be agricultural production facilities producing, for example animal waste products such as manure.

The biomass pollution environment 1 is the environment where the biomass is an enclosure containing a predetermined cultivation medium. For algae, the cultivation medium is a variant of water, such as fresh water, brackish water or saline water according to cultivation requirements of the type of algae used. Since the photosynthesis process performed by the algae uses sunlight, or artificial light of a comparable light spectrum, as an energy source, the enclosure is constructed to allow light to reach the algae. In one embodiment, the biomass/pollution environment 1 is configured for sunlight to reach the cultivation medium. The sunlight may be replaced by or supplemented with artificial light of the same wavelength spectrum. In one embodiment, the direction of light into the biomass/pollution environment 1 can be controlled and optimized with an arrangement of mirrors or light guides, e.g., glass fibers.

The biomass/pollution environment 1 is in one embodiment an open shallow pond, or a series of such ponds filled with water and open to sunlight with circulation provided by paddle wheels, so called raceway-type ponds. The introduction of CO₂ to this environment can be achieved by a system of perforated underwater tubes that distribute the CO₂ by releasing it in streams of bubbles. In another embodiment the open shallow ponds may be used without circulation.

In one embodiment, the biomass/pollution environment 1 may be a narrow tank, or a series of narrow tanks filled with water and made from a material transparent to light, so called bio reactors. Such installations are known for the cultivation of algae, e.g., for the production of bio diesel. It is contemplated that the biomass/pollution environment 1 may be selected from a variety of containers filled with water and transparent to light. Further, it is contemplated that in an artificial biomass/pollution environment 1 the distribution of the CO₂ can be achieved by a system of perforated underwater tubes that distribute the CO₂ by releasing it in streams of bubbles.

The biomass/pollution environment 1 is not necessarily artificial and the algae growth may not be the result of intentional cultivation. Such environments can be natural ponds or other bodies of water, artificial or natural, that are polluted by uncontrolled algae growth. Since algae blooms pose a major problem due to the washing of fertilizers from agriculture into the water the technology described herein can also be applied to permanently remove such biomass. As stated above, the term "algae" is a representative of any kind of biomass capable of performing oxygenic photosynthesis.

Accordingly, the biomass/pollution environment 1 could also be, in the case of land based biomass, an agricultural field. An example for this would be the managed growing of corn for the production of ethanol or other products.

If the accommodation of the pollutants by the biomass is performed by mechanical absorption, the biomass/pollution environment 1 could also be some kind of receptacle where the biomass or biomass products such as paper or other cellulose products can be combined with pollutants such as animal manure, but also other polluting substances that can be turned into or occur in liquid suspension. The biomass products will absorb such liquid suspensions much like a sponge.

The biomass, once removed from the biomass/pollution environment 1, is subject to a drying procedure in the drying/pressing unit 2. The function of this unit is to remove water and excess moisture from the biomass. This can be accomplished by pressing and subsequent drying or by pressing or drying alone. The drying/pressing unit 2 in the preferred embodiment is a mechanical press operated by hydraulics or some other means of mechanical power transmission. In another embodiment the drying facility may contain a centrifuge or similar device to remove water from the biomass by means of rapid rotary movement.

In one embodiment the biomass is not dried at all, or only partially dried before being subjected to further processing. The drying unit 2 can also be an open place where the drying is accomplished by solar heat. In another embodiment the drying unit 2 is a source of heat, or a source of microwaves. The heat applied in this case may be just sufficient to remove moisture from the biomass but it may also be high enough to turn part or all of the biomass into so called bio char, which is basically a form of charcoal. The last option would require that the heating facility could operate in a vacuum. Such facilities are well known for bio char production.

The drying/pressing unit 2 can also be formed of more than one of the above facilities allowing sequential pressing and drying procedures. It may also be that the biomass arrives at the drying/pressing unit 2 in a dried state. In this case the drying/pressing unit 2 may only function as a pressing unit, pressing the biomass into compact shapes.

In the sterilization unit 3 the algae is subjected to a sterilization procedure to arrest the biological decomposition of the biomass. In one embodiment, the sterilization unit 3 is a source for ionizing radiation; either high-energy electrons or X-rays from accelerators, or by gamma rays (emitted from radioactive sources as Cobalt-60 or Cesium-137). Since high-energy electrons such as X-ray can only penetrate organic material up to a depth of about 3 cm, the algae layer treated in this way has a thickness that does not exceed that thickness. If electron rays are applied from above and below the thickness of the layer may be up to 6 cm. Gamma radiation can irradiate any practical depth of algae given the nominal dosage of 1.12 to 1.33 MeV (Cobalt-60) and 0.66 MeV (Caesium-137) as is the practice for food and hospital sterilization.

In one embodiment, the sterilization unit 3 is a source of ultraviolet radiation at a wavelength of 240-280 nm, or a source of micro wave radiation. In another embodiment, the sterilization unit 3 is a source of heat, such as, for example, an autoclave, and/or a source of hot steam, optionally in combination with a pressure of at least 70,000 pounds per square inch. Further, the sterilization unit 3 may include a chemical treatment feature, using substances such as ethylene oxide gas, ozone, chlorine bleach, ortho-phthalaldehyde, hydrogen peroxide, peracetic acid, or other appropriate substances. In another embodiment the sterilization unit 3 may be implemented in the unit 4-b that combines algae and the primary encapsulation material, since the melting temperature of about 250°C ― 300°C for some encapsulation materials may be sufficient to achieve a high sterility assurance level.

In the encapsulation unit 4 the biomass is combined with the primary encapsulation material. This encapsulation may require that the primary encapsulation material is transformed into a temporary or transitional viscous or liquid state. How this is achieved depends on the kind of encapsulation material used.

The unit 4a transforms the primary encapsulation material into a temporary viscous or liquid state and is a source of heat to melt the material and a vat to contain the material in its molten state. This approach is primarily used with materials like polymers, glass, cement or metal. The temperatures required for the different encapsulation materials are detailed below. In another embodiment the unit 4a to transform the primary encapsulation material into a temporary viscous or liquid state is configured to mix the material with water or another solvent.

While the primary encapsulation material is in its temporary or transitional viscous or liquid state it is combined in the unit 4b with the algae. In the preferred embodiment, the unit 4b is a vat constructed of a material that has a melting point higher than the melting point of the primary encapsulation material. In another embodiment, the unit 4b can be a conveyor belt or other form of mobile contraption that moves the prepared biomass though a bath of encapsulation material or past devices that pour or spray the encapsulation material over the biomass. In other embodiments, the unit 4b can be any environment where the biomass is either mixed with or surrounded and encased by the primary encapsulation material. The configuration of unit 4b can vary depending on the specific nature or state of the biomass and on the encapsulation material and method involved.

Since the encapsulation procedure can be repeated several times encapsulation unit 4 can contain several sets of subunits in the manner of unit 4a and unit 4b, each preparing an encapsulation material and then combining the result of the previous encapsulation process with said encapsulation material. As an example Figure 1 shows a unit 4c and 4d that provide a secondary encapsulation.

Unit 4c prepares a secondary encapsulation material for encapsulation It can have the same features as unit 4b, if the encapsulation material has to be transformed into a viscous or liquid state. However, depending on the method for secondary encapsulation selected it can also be any means necessary to prepare the secondary encapsulation process. It can also be that in some cases, for example, when a secondary encapsulation is a ready made container, a separate unit like 4 b is not necessary.

Unit 4d combines the primary encapsulation mixture of biomass and primary encapsulation material with the secondary encapsulation. It can have the same features as unit 4b, if the encapsulation material has to be transformed into a viscous or liquid state. However, depending on the method for secondary encapsulation selected it can also be any means necessary to combine the result of the primary encapsulation process with the secondary encapsulation. If, for example, a secondary encapsulation takes the form of a ready made container, unit 4d could be a facility to put the result of the primary or any previous encapsulation procedure into said container and seals the container so that encapsulation of the material within the container is achieved. This encapsulation process can be repeated several times, each time encapsulating the result of the previous encapsulation process.

The different stages of encapsulation can be achieved by different sets of encapsulating sub units, of which unit 4a to 4d are only examples, or it can be achieved by only two units simply repeating the same encapsulation process several times, or by a combination of the different and repetitive encapsulations.

After encapsulation has been achieved, the resulting storage unit is transported to Storage unit 5 for transitory or permanent storage. According to the object of the invention, which is permanent removal of pollutants from the atmosphere, it is obvious that storage unit 5 should be configured in a way that ensures safe storage.

Storage sites or environments could be either man made, such as, for example, storage buildings or warehouses, natural parts of a landscape, such as caves, rock-crevices or deep sea environments, or man made structures within naturally occurring formations, such as open pit mines, deep mines, tunnels, abandoned air raid shelters or subway tunnels or artificial structures such as buildings, or reefs etc.

In a preferred embodiment the storage environment should be equipped with devices that allow detection of influences or parameter changes that can compromise storage security. This can be done by monitoring the pollution content within the site or environment or other methods that indicate if one or more of the storage units have been damaged, started to leak or have been compromised in their structural integrity

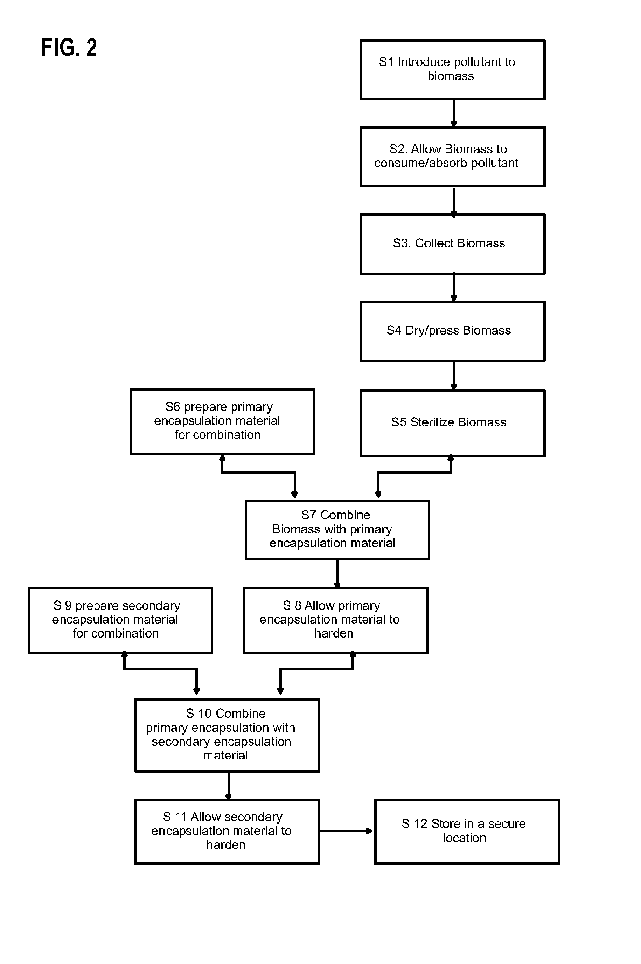

Fig. 2 is a flow chart of one embodiment of a method of removing pollutants from the environment as performed in the system illustrated in Fig. 1. In a step S1, pollutants from the pollution source 0 is introduced to the biomass/pollution environment 1. In one embodiment CO₂ enriched exhaust fumes from power plants, synthetic fuels plants, liquid fuels refineries, cement kilns, ammonia production facilities, or other industrial facilities are directed to the algae in the biomass/pollution environment 1 via a system of perforated tubes that run beneath the water's surface and release the CO₂.

In another embodiment the method is applied to CO₂ coming from CO₂ storage facilities. These can either be temporary storage facilities such as tanks or pipelines, but also what is commonly called carbon containment and storage (CCS) facilities intended for otherwise long-term storage where pressure buildup can be bled off into the biomass/pollution environment 1, or such CSS where such long-term storage is in threat due to having become damaged and are leaking CO₂ into the atmosphere or groundwater.

Alternatively, CO₂ enriched air can be directly taken from CO₂ enriched atmosphere and pumped into the cultivation environment. In another embodiment CO₂ can be directly taken from the air to create a CO₂ enriched atmosphere and pumped into the cultivation environment. Another embodiment deals with cases were CO₂ has not been artificially infused into the biomass cultivation environment, but has been introduced by natural procedures, such as atmospheric interaction with surfaces of ponds, flowing water, or is a component of the natural atmosphere of the cultivation environment in land based plants.

In another embodiment pollutants in liquid suspension such as animal manure are absorbed by the biomass or biomass products.

In a step S2, the pollutant is consumed or absorbed by the biomass in the biomass/pollution environment 1. In one embodiment the biomass/pollution environment 1 is filled with a cultivation medium for algae according to the cultivation requirements of the type of algae used, The term biomass or algae as used in this disclosure refers to any kind of vegetation that is capable to consume CO₂ and process it using sunlight and H₂O in a chemical procedure known as oxygenic photosynthesis. It is to be considered synonymous with any kind of vegetation or microorganism capable of this procedure. Other kinds of microorganisms may also be employed such as, for example, Acidianus ambivalens. This process converts the CO₂ using H₂O into CH₂O, and releases oxygen. Since oxygenic photosynthesis is a process found in all green plants, algae and cyanobacteria all these substances may be used for this purpose. The cultivation environment may be water in the case of water based plants, or air in the case of land based plants. The exact composition of the cultivation medium depends on the nature of the specific biomass involved.

In one embodiment the CO₂ consumption is achieved via algae, for example, of the type Chlorella. In another embodiment waste products and residuals of other procedures involving algae or other types of biomass, land and water based, are used. Such procedures can be, for example, the production of bio fuel, ethanol, cosmetics or other products, where a residual remains after the biomass has been processed or parts of the plants have been removed for processing. In this embodiment the managed growth procedure is not necessary. Another embodiment employs algae or biomass that are not cultivated but grow naturally.

In another embodiment, land-based plants or parts thereof are used for pollutant consumption, or digestive products of organisms that have consumed the plant material described above as well as substances generated by processing the algae via chemical or technological means such as, but not limited to, changes in temperature and pressure. The term "algae" used subsequently also extends to such secondary or ternary etc. algae products.

In still another embodiment products of biomass such as paper, cardboard or other cellulose products are used to absorb pollutants in liquid suspension.

In a step S3, the biomass is harvested or collected from the biomass/pollution environment 1. This step involves every procedure where biomass processed according to this invention is removed and collected from its cultivation environment. Such harvesting or collecting methods are known from cultivation of biomass for food and non-food products. It is not necessary that the biomass is harvested exclusively for the purposes of the disclosed technology but it can also be harvested for other purposes such as food or industrial production.

In one embodiment the algae are harvested from an aquatic environment by mechanical filtration, or by so called bio-flocculation or auto-flocculation triggered by engineered changes to environmental conditions of the growth media or by addition of flocculation-stimulating compounds or materials, by mechanical filtration.

In one embodiment indirect harvesting by biological concentration is applied. An example for this procedure is to have certain types of fish such a Tilapia fish feed on the algae and then collect their droppings. In another embodiment hydrophobic algae species are cultivated that naturally layer themselves upon removable surfaces. In another embodiment algae strains with hydrophobic surfaces are cultivated that may be harvested by circulating solids with similarly hydrophobic surfaces through the growth media, onto which the algae may accumulate. In systems that cultivate algae as a bio-film on solid surfaces, algae may be removed from the surfaces for subsequent encapsulation, or for production of multiple coproducts including encapsulation, or encapsulation may encompass the solid surfaces on which algae is cultivated, as in layered plastic-algae-plastic sheets described below.

In another embodiment a combination of two or more of the above methods is used. In land based plants harvesting procedures will most likely depend on the plant type used, the environment and the intended purposes of the biomass. It may also be that for those purposes only a part of the harvested plants is used and the residuals are processed according to this technology. An example is the processing of corn into bio ethanol. In this procedure only a part of the corn plants is subjected to industrial processing while the residuals are discarded as corn stover. The processing of such residuals - as byproducts of such industrial processing ― occurs in the manner disclosed herein.

In a preferred embodiment, the biomass, after being harvested, are subjected to further processing in their original state. In one embodiment, the biomass is subjected to some form of shredding or grinding. This may be necessary if the biomass does not consist of micro algae but of larger macro-algae or of plants whose size makes them awkward to handle for the subsequent processing stages. This shredding procedure can take place at any processing stage prior to encapsulation. If biomass products such as paper or other cellulose products are used to absorb pollutants in liquid suspension they may be shredded prior to being brought into contact with the pollutant in the biomass pollution environment 1.

In a preferred embodiment, the bio mass, once removed from its growing environment is subjected in a step S4 to a drying procedure in the drying/pressing unit 2. The drying can be achieved by processing the algae with devices that apply mechanical pressure to press the water out of the biomass. Such devices can be, for example, heavy rollers or a hydraulic press. As a result of this procedure the algae may also be pressed and molded into compact shapes, such as blocks. Another method to achieve drying is centrifugation of the biomass.

The drying can be accomplished by subjecting the algae to (artificial) heat. This may be achieved in a drying installation that has an internal drying chamber with controllable temperature and may work either by heating up one or more of the internal surfaces of this drying chamber or by circulation of hot air. Such devices are known. A drying chamber may also operate using microwaves, or the drying process may be performed in a large drying hall.

The heat and or pressure applied or generated may be just sufficient to remove moisture from the biomass but it may also be high enough to turn the biomass partly or fully into so called bio char, which is basically a form of charcoal. The last option would require that the heating facility could operate in a vacuum that may also be pressurized. In another embodiment the biomass can be dried by freeze drying. In another embodiment the drying of the algae may also be achieved by spreading it on an open surface and use the warmth provided by the sun to accomplish the drying. Also the drying can be achieved by a combination of the above procedures such as first pressing the water from the biomass by means of mechanical pressure and subsequently removing residual moisture via the application of heat. Molding of the biomass into compact blocks can also be achieved by mechanical pressure, e.g., during the drying procedure or after the water and residual moisture have been removed by other methods.

It may also be that the biomass arrives at the drying/pressing unit 2 in a dried state. In this case the drying/pressing unit 2 may only function as a pressing unit, pressing the biomass into compact shapes. Also, during or prior to pressing additional substances may be added to the biomass that serve as binders or stabilizers, or CO2 absorbers or anti bacterial agents. Further, the algae may not be dried at all or only partially dried before being subjected to further processing.

Also other and additional forms of processing and use of the algae prior to encapsulation are possible and still within the scope of this invention. As an example the bio char optionally produced in step S4 may prior to encapsulation be used to filter impurities from water.

In the illustrated embodiment, the algae are sterilized in a S5 in the sterilization unit 3 to kill any bacteria and microorganisms that may cause or facilitate algae decomposition. This can be accomplished with methods known from food and non-food sterilization and may be applied prior, during or even after encapsulation. In one embodiment such sterilization is performed prior to encapsulation. The sterilization is accomplished by exposure of the algae to ionizing radiation; either high-energy electrons or X-rays from accelerators, or by gamma rays (emitted from radioactive sources such as Cobalt-60 or Cesium-137).

Since high-energy electrons such as X-ray can only penetrate organic material up to a depth of 3 cm, the algae layer treated in this does not exceed that thickness. If electron rays are applied from above and below the thickness of the layer may be up to 6 cm. Gamma radiation can irradiate any practical depth of algae given the nominal dosage of 1.12 to 1.33 MeV (Cobalt-60) and 0.66 MeV (Caesium-137) as is the practice for food and hospital sterilization.

Sterilization may be achieved by exposing the algae to ultraviolet radiation at a wavelength of 240-280 nm. In another embodiment sterilization may be achieved by subjecting the algae to micro wave radiation. In another embodiment sterilization of the algae can be achieved by heating treatment. In one embodiment this is accomplished by a method known as dry heat sterilization. In this method the algae is heated to at least 160°C for two hours or 170°C for one hour.

Further, the sterilization may be accomplished by one of the forms of moist heat sterilization that use hot air together with moisture to kill germs and bacteria. In one embodiment sterilization is accomplished by hot pressurized steam. Also, the algae are subjected to high pressure of at least 70,000 pounds per square inch. Under such conditions most, but not all, microorganisms are killed. In another embodiment sterilization can be achieved by chemical treatment as explained above.

Combinations of two or more of the above methods may be used to maximize the sterility assurance level (SAL). In one embodiment sterilization may be accomplished during primary encapsulation since the melting temperature of about 250°C - 300°C for some encapsulation materials the primary encapsulation procedure may be sufficient to achieve a high sterility assurance level. Also all other forms of sterilization that arrest the biological decomposition of the biomass are still within the scope of this invention.

It may be determined that sterilization is unnecessary due to particular parameters or the general nature of subsequent encapsulation processes or long term storage systems. The electromagnetic radiation can be applied not only prior, but during or after primary or secondary encapsulation if the encapsulation materials have been used that can be penetrated by such radiation. In one embodiment combinations of two or more of the above methods are used prior to, during and after encapsulation to maximize the sterility assurance level.

The primary encapsulation procedure involves combining the algae with an encapsulating material or medium. This primary encapsulation surrounds the algae, either as a whole or in the form of smaller units, to prevent decomposition and subsequent generation of CO₂ or other greenhouse gases. Therefore, the primary encapsulation material is capable to isolate the algae from air, external moisture, microorganisms and any other agents that may lead to such decomposition. Also, the primary encapsulation procedure together with the subsequent secondary encapsulation procedure allows molding the resulting storage units in a way that facilitates transport and storage.

In a step S 6, the primary encapsulation material is transformed in the unit encapsulation unit 4a to a temporary viscous or liquid state. The details of this procedure depend on the type of encapsulation material used. In the preferred embodiment the encapsulation material is a polymer. Suitable polymers are those commonly produced by the plastic industry and found in abundance in collections of waste plastic:
● PET (PETE), Plyethylene Terephtalate: Commonly found in soft drink bottles, water bottles, cooking oil bottles, peanut butter jars.
● Substances generated by the polymerization of algae or other biological substances.
● HDPE, high-density polyethylene: Commonly found in detergent bottles, milk jugs.
● PVC, polyvinyl chloride: Commonly found on plastic pipes, outdoor furniture, siding, floor tiles, shower curtains, clamshell packaging.
● LDPE, low-density polyethylene: Commonly found in dry cleaning bags, produce bags, trash can liners, and food storage containers.
● PP, polypropylene: Commonly found in bottle caps, drinking straws, yoghurt containers, legos.
● PS, polysterine: Commonly found in "packing peanuts", cups, plastic tableware, meat trays, take-away food clamshell containers.

The above polymers related to the primary encapsulation become viscous at about 250°C ― 300°C. In another embodiment, the encapsulation material is glass. For glass and the like the viscosity temperature is in the range of 800°C. In another embodiment such encapsulation material may result from reprocessing and rendering such waste polymer or glass from discarded industrial, private waste, landfills, ocean clusters, etc. The encapsulation material may further be a metal, substances of mineral origin such as clay or cement that can be mixed with water to achieve a viscous state and harden, geopolymers, including but not limited to those produced from industrial wastes, such as fly ash, olivine or other CO₂ absorber may be mixed into the encapsulation media.

A substance with a greater density and weight per unit than the encapsulation media may be intermixed with the encapsulation media to ensure the resulting encapsulation will sink to the bottom of a given aquatic storage area.

Any material that can be transformed into a temporary viscous or liquid stage by the application of a liquid solvent that allows it to be combined with the plant material and subsequently hardens may be used. Similarly, any material that can be transformed into a temporary viscous or liquid state that allows it to be combined with the plant material and subsequently hardens may be used. In one embodiment combinations of the two or more of the above materials are used concurrently.

In another embodiment encapsulation materials may be used that do not need to be liquified because they already come in liquid form and are subsequently hardened by contact with air, changes in temperature or ultraviolet or other types of electromagnetic radiation or contact with other substances.

In a step S7, the primary encapsulation material, while still in the viscous or liquid state achieved in step S6 is combined with the algae in encapsulation unit 4b. This is the primary encapsulation procedure. The primary encapsulation procedure takes place under conditions that prevent or minimize further contact with decomposing agents such as microorganisms. This may be accomplished in a sterile environment or an environment that is subjected to UV radiation. Alternatively, the sterility assurance level of the previously described sterilization procedures may be considered sufficient and encapsulation under sterile conditions may not be necessary.

The combination of algae and primary encapsulation material is achieved by transforming the primary encapsulation material temporarily to a liquid or viscous state in step S6 and then pouring the algae into the liquid or viscous primary encapsulation material, or pouring the liquid or viscous primary encapsulation material over the algae. Algae and encapsulation material may also be mixed or stirred by using additional mixing implements to achieve better distribution.

In another embodiment the primary encapsulation material is sprayed or poured over the algae. In another embodiment the primary encapsulation material may be applied by passing the algae through a bath of the encapsulant. These embodiments are especially applicable where the biomass has been pressed into compact shapes or blocks in the drying/pressing unit 2.

In another embodiment, the biomass may, at this stage, be encased in containers or wrapped in layers of plastic foil. These encasing methods can be performed in away that the air is sucked out to create a vacuum within the encapsulated space.

The temperature increase of the algae from mixing with the temporarily viscous or liquid encapsulation material, or from heat transfer immediately preceding such mixing, may result in partial gasification or pyrolysis of the algae that releases vapors, which may be captured for independent uses.

Additional substances may be introduced into this mixture for additional effects, such as material that is heavier than water, to allow underwater storage. Also, substances may be added that have CO₂ and other pollutant absorbing effects. A known substance is, for example, cement that is supplemented with magnesium oxide or olivine. Olivine or another CO₂ absorber may be mixed into the encapsulation media. Such substances may be also added to the unmixed biomass at any convenient stage of the entire process.

Other ways and methods of encapsulation in the sense of surrounding the biomass with a protective layer that prevents the biomass from decomposition such as rotting are possible.

In a step S8, the mixture of primary encapsulation material and algae is allowed to harden. To harden, the mixture may be poured in forms or molds, extruded into longitudinal forms, which can be subsequently cut to various lengths or otherwise manipulated, or left inside the mixing receptacle where the combining of algae and encapsulation material has taken place. In another embodiment, where the encapsulation is limited to a surrounding and encasing layer of encapsulation material special receptacles for hardening may not be necessary.

While in some embodiments only one layer of encapsulation may be sufficient to achieve isolation from decomposing influences, in a preferred embodiment the first layer of encapsulation is again surrounded by one or more layers of additional layers of encapsulating material. This is termed the secondary encapsulation. It is preferable that the secondary encapsulation is achieved using a material that is more permanent and more durable than the material used for primary encapsulation.

In a step S9, the secondary encapsulation material is transformed to a temporary viscous or liquid state in the encapsulation unit 4c. The details of this procedure depend on the type of encapsulation material used. The secondary encapsulating layer is made of glass with a viscosity temperature in the range of 800°C. In another embodiment the secondary encapsulation material is a polymer, e.g., PET, substances generated by the polymerization of algae or other biological substances, HDPE, PVC, LDPE, PP, PS, or Polysterine, as mentioned above. Other materials are as described above with respect to the primary encapsulation.

In a step S10, the mixture generated in S 7 is combined with the secondary encapsulation material in encapsulation unit 4d. For secondary encapsulating materials that have a lower or significantly higher melting point than the primary encapsulation material, the secondary encapsulating material may be molten and than poured or sprayed over the combination of plant material and primary encapsulating material after the primary encapsulating material has solidified. This is done in a way so that the secondary encapsulating material is able to fully surround the solidified mixture of algae and primary encapsulating material. Similarly, secondary encapsulating materials that do not require melting may be poured over and around the mixture.

In step S7, the primary encapsulation material, while still in the viscous or liquid state achieved in step S6 is combined with the algae in Encapsulation Unit 4d. This is the primary encapsulation procedure.

For secondary encapsulating materials that have a higher melting point than the primary encapsulation material two approaches are possible. In one embodiment, the solidified mixture prior to being surrounded by secondary encapsulating material is surrounded by an in-between layer of an isolating material, such as clay, ceramics, grease or any other appropriate material that prevents the mixture from melting upon contact with the hot secondary encapsulating material. In another embodiment the sequence of operations is reversed as the secondary encapsulation layer is created first, as a kind of open container or receptacle, then the mixture of viscous primary encapsulation material and algae is poured into this container and the opening of the container is closed with a layer of secondary encapsulation material and sealed. In another embodiment the primary encapsulation may be passed through a bath of viscous or liquid secondary encapsulation material.

Additionally to the primary and secondary encapsulation methods already discussed other procedures are possible that are still within the scope of this invention. These procedures can be used for primary encapsulation, secondary encapsulation or both. The encapsulation may be achieved by creating a layered composite whereby a layer of encapsulating material either preformed or still viscous is laid down and algae placed a top. Another layer of encapsulating material that is pre-formed or still viscous is sprayed or poured down on top of the previous layer of encapsulating material covered with algae.

In one embodiment the preformed plastic layer can also be the initial layer whereupon the algae are deposited. The layers of encapsulating material with algae are pressed together in a manner and environment intended to deplete or remove oxygen and create a hermitically sealed entity. The layered encapsulating material with sandwiched algae can be pressed by heated or other elements to further compartmentalize the encapsulated algae into small independently hermitically sealed nodules of encapsulating composite.

The layering can be individually encapsulated with secondary etc. encapsulation or the individual layering of encapsulating material and algae can be stacked and then in mass encapsulated by a secondary media etc.

The process of creating a layered encapsulating composite sandwiching plastic-algae-plastic can be performed using layers of pre-formed plastic sheet below and above the layer of plastic whereby the laminated composite is formed by evacuation atmosphere and under pressure and heat creating hermitically sealed nodules of encapsulated algae.

In another embodiment encapsulation can be achieved by ejecting the liquid or viscous encapsulating material by a process of extrusion whereby the encapsulating plastic in a viscous state is ejected via a mold-like orifice that may, for example, shape the encapsulating material into a tube-like extrusion. The algae, either in its original form or pre-processed in the manner described above, can then be injected into the encapsulation material during the extrusion process to form, in the case of a tube like orifice, a spaghetti-like structure that is filled with the plant material intermixed with encapsulation material. This extrusion can be directly secondarily encapsulated with such material as described above or can then be transferred to a container or spooled before being encapsulated in any appropriate secondary encapsulation material discussed above.

While in the preferred embodiment the algae is combined with one or more layers of a temporarily liquid or viscous encapsulation material that is subsequently allowed to harden in another embodiment the method of encapsulation of said vegetative matter can be in containment cells, containers or other receptacles made of plastic or other materials and encapsulated in multiple layers of plastic and secondary encapsulating material.

In this embodiment any air may be evacuated to create a vacuum in the containment cell; sealing may be done in a manner to maintain the vacuum. It is preferable in the embodiment that the algae or vegetative matter in the containment cell be sterilized as specified above and mixed with oxygen binding substances to complete the removal of any residual oxidants. The containment cell may also contain in addition to biomass anti-microbe, anti-bacterial or antifungal substances. Such substances may also be included in all other encapsulation embodiments.

It is to be noted that the storage in containment cells may also be performed in a way that allows removal of the algae from the containment cell at a later time. In such cases encapsulation other than the containment container itself may not be applied. In another embodiment encapsulation is achieved by placing a layer of algae between two ready made sheets of plastic that are then vacuum sealed in a way that individual isolated nodules of algae are formed. It is contemplated that other substances and structures may be integrated into the secondary encapsulation for enhanced stability and durability.

The secondary encapsulation may be a ready-made durable sealable container that surrounds the primary encapsulation. The secondary encapsulation procedure can be repeated several times to form additional protective layers around the primary encapsulating material.

It is contemplated that the resulting storage units should be molded in a way that allows for easy transport and storage on land, underground or underwater. The exact shape of these blocks should be determined by the storage method applied. Cubic or rectangular blocks could be stacked on one another. Spherical or ball shaped blocks could be stacked in a way that stabilizing substances could be injected or inserted in the space between them.

As stated above, the object of the invention is the permanent removal of CO₂ and other pollutants from the atmosphere. Therefore, it is essential that the storage modules created by the disclosed procedures are stored in secure storage site or environment in step S 12. Such sites and the storage modalities therein should be safe from any influences that could compromise the structural integrity of the storage modules in any way that may result in decomposition of the stored biomass or in the release of the products of such decomposition into the environment or atmosphere. Such detrimental influences can be of a physical, mechanical, chemical or biological nature.

For monitoring the stored biomass for influences detrimental to storage security the system may include at least one detector configured to detect influences compromising storage security, wherein the detector is coupled to the processed biomass.

Since, as in conventional storage of CO₂ there is always the danger of pollutant leakage from the storage units the environment or site should be equipped and configured in a way that allows the detection of the appearance and extent of such influences and the possibility to address and repair them. Storage sites or environments could be either man made, such as, for example, storage buildings or warehouses, natural parts of a landscape, such as caves, rock-crevices or deep sea environments, or man made structures within naturally occurring formations, such as open pit mines, deep mines, tunnels, abandoned air raid shelters or subway tunnels or artificial structures such as buildings, or reefs etc.

In a preferred embodiment the storage environment should be equipped with devices that allow detection of influences or parameter changes that can compromise storage security. This can be done by monitoring the pollution content within the site or environment or other methods that indicate if one or more of the storage units have been damaged, started to leak or have been compromised in their structural integrity. The storage units should also be stored in a way that allows any leaking or structural damage to be addressed and repaired.

Also, the individual or selected storage modules can be equipped with such detection devices. Also, it is possible to store and monitor samples of storage modules separate from a storage site or environment but under conditions representing or corresponding to the conditions present in a storage environment. This would allow the representative detection of damaging influences resulting from the conditions in the storage environment or from interactions between conditions in the storage environment and the storage modules and to focus remedial detection on storage sites related to deteriorated SBE sample modules.

In the preferred embodiment the entire procedure, including algae cultivation, sterilization, and encapsulation is performed in the same installation or in closely adjacent plants. In another embodiment various operational stages of the procedure can be separated and performed in different locations. For example the algae cultivation procedure can be performed in the immediate vicinity of a power plant and the algae could be transported to a different location for sterilization and encapsulation.

It is contemplated that other modifications and variations of the present invention are possible in light of the above teachings. It is, therefore, to be understood that within the scope of the appended claims, the invention may be practiced otherwise than as specifically described.

## Claims

1. A method for removing pollutants from the environment, comprising:
bringing the pollutants with solvent and a binding agent into a liquid or viscous solution,
changing the state of the pollutants from a solved state into a bound state,
dehydrating the solution,
bringing the dehydrate product into a predetermined shape,
sterilizing the dehydrate product, and
combining the dehydrate product with an encapsulating material to create blocks of encapsulated processed product.

2. The method of claim 1, wherein the dehydrating comprises a pressing of the binding product into said predetermined shape.

3. The method of claim 1 or 2, wherein the binding agent comprises pollutant absorbing substance, wherein changing the state of the pollutants comprises absorption of the solved pollutant by the absorber thus binding the pollutant to the absorber.

4. The method of claim 3, wherein the pollutant absorber is a used up cellulose product being shredded before brought into the solution.

5. The method of one of the preceding claims, wherein the binding agent comprises living plant material, the plants decomposing the pollutant and binding at least a part of the decomposition products into biomass.

6. The method of claim 5, wherein decomposing comprises metabolization of the pollutant.

7. The method of claim 5 or 6, wherein decomposing comprises photosynthesis by consumption of the pollutant.

8. The method of one of the preceding claims, wherein the pollutant is an exhaust gas from an industrial process, in particular CO₂.

9. The method of one of the preceding claims, wherein the pollutant is animal excreta.

10. The method of one of the preceding claims, wherein the binding agent comprises living plant material, wherein the pollutant and the water produce a nutrient solution for the plants.

11. The method of one of the preceding claims, further comprising monitoring the stored blocks of processed biomass for influences detrimental to storage security.

12. The method of claim 11, wherein at least one monitored sample of stored blocks is stored separate from a storage environment under conditions corresponding to conditions in a storage environment.

13. The method of one of the preceding claims, wherein sterilizing of the biomass is accomplished during dehydrating by pressing.

14. A system for removing pollutants from the environment, comprising:
a dehydrating unit for dehydrating a solution into a dehydrate product, the solution containing the pollutants, water, and a binding agent,
a shaping unit for bringing the dehydrate product into a predetermined shape,
a sterilizing unit configured to sterilize the dehydrate product, and
a unit to combine the processed product with an encapsulating material to create blocks of processed product.

15. The system of claim 14, wherein at least two of the units: dehydrating unit, shaping unit and sterilizing unit, form one unit for performing at least two steps of dehydrating, shaping, respectively sterilizing in one step.
